# EUROPEAN PATENT APPLICATION

(11) **EP 4 811 148 A1**
(43) Date of publication of application: **23.09.2026**
(21) Application number: 25183644.1
(22) Date of filing: 18.06.2025
(51) Int. Cl.: G06F 15/173, G06F 9/50

(54) **DATA PROCESSING METHOD, APPARATUS, DEVICE, MEDIUM AND PRODUCT**

(30) Priority: 17.03.2025 CN 202510315883
(71) Applicant: Beijing Baidu Netcom Science Technology Co., Ltd., Beijing 100085 (CN)
(72) Inventor: CAO, Ying, Beijing, 100085 (CN); LI, Zhaogeng, Beijing, 100085 (CN); GONG, Xiaozhang, Beijing, 100085 (CN)
(74) Representative: Michalski Hüttermann & Partner mbB

(57) **Abstract**

The present disclosure provides a data processing method, apparatus, device, medium and product, which relates to the field of artificial intelligence technology, specifically in the fields of intelligent cloud, network communication, and large language models. The data processing method is applied to a single-layer switch, where the single-layer switch is configured to complete a target operation, and the target operation includes multiple stage operations. The method includes: receiving multiple in-network computation requests sent by a current GPU, where the multiple in-network computation requests correspond to the multiple stage operations one by one; parallelly executing the multiple stage operations for multiple GPUs in a target group where the current GPU is located based on the multiple in-network computation requests.

## Description

### TECHNICAL FIELD

The present disclosure relates to the field of artificial intelligence technology, specifically in the fields of intelligent cloud, network communication, and large language models, and particularly to a data processing method, apparatus, device, medium and product.

### BACKGROUND

With the development of artificial intelligence (AI) large models, large-scale Graphics Processing Unit (GPU) clusters are required. GPUs within a GPU cluster can interact through switches.

In-Network Computing (INC) is an emerging computing paradigm that migrates computing capabilities from traditional computing nodes (such as GPUs) to network devices (such as switches), where network devices execute partial computing tasks to achieve data transmission and processing simultaneously.

In GPU cluster scenarios, how to implement INC is a problem that needs to be solved.

### SUMMARY

The present disclosure provides a data processing method, apparatus, device, medium and product.

According to one aspect of the present disclosure, a data processing method is provided, applied to a single-layer switch, where the single-layer switch is configured to complete a target operation, the target operation includes multiple stage operations, and the method includes: receiving multiple in-network computation requests sent by a current GPU, where the multiple in-network computation requests correspond to the multiple stage operations one by one; parallelly executing the multiple stage operations for multiple GPUs in a target group where the current GPU is located based on the multiple in-network computation requests.

According to another aspect of the present disclosure, a data processing method is provided, applied to a GPU, including: obtaining connection information of a single-layer switch, where the single-layer switch is configured to complete a target operation, and the target operation includes multiple stage operations; sending multiple in-network computation requests to the single-layer switch based on the connection information, where the multiple in-network computation requests correspond to the multiple stage operations one by one, so that the single-layer switch parallelly executes the multiple stage operations for multiple GPUs in a target group where the current GPU is located based on the multiple in-network computation requests.

According to another aspect of the present disclosure, a data processing apparatus is provided, applied to a single-layer switch, where the single-layer switch is configured to complete a target operation, the target operation includes multiple stage operations, and the apparatus includes: a receiving module, configured to receive multiple in-network computation requests sent by a current GPU, where the multiple in-network computation requests correspond to the multiple stage operations one by one; a processing module, configured to parallelly execute the multiple stage operations for multiple GPUs in a target group where the current GPU is located according to the multiple in-network computation requests.

According to another aspect of the present disclosure, a data processing apparatus is provided, applied to a GPU, including: an obtaining module, configured to obtain connection information of a single-layer switch, where the single-layer switch is configured to complete a target operation, and the target operation includes multiple stage operations; a sending module, configured to send multiple in-network computation requests to the single-layer switch according to the connection information, where the multiple in-network computation requests correspond to the multiple stage operations one by one, so that the single-layer switch parallelly executes the multiple stage operations for multiple GPUs in a target group where the current GPU is located based on the multiple in-network computation requests.

According to another aspect of the present disclosure, an electronic device is provided, including: at least one processor; and a memory communicatively connected to the at least one processor; where the memory stores instructions executable by the at least one processor, the instructions when executed by the at least one processor, cause the at least one processor to perform the method according to any of the above aspects.

According to another aspect of the present disclosure, a non-transitory computer-readable storage medium storing computer instructions is provided, where the computer instructions are used to cause the computer to perform the method according to any of the above aspects.

According to another aspect of the present disclosure, a computer program product is provided, including a computer program, where the computer program when executed by a processor implements the method according to any of the above aspects.

The present disclosure can implement in-network computing in GPU cluster scenarios.

It should be understood that the content described in this section is not intended to identify key or essential features of the embodiments of the present disclosure, nor is it used to limit the scope of the present disclosure. Other features of the present disclosure will become readily apparent through the following description.

### BRIEF DESCRIPTION OF THE DRAWINGS

The drawings are used for better understanding the present solution and do not constitute a limitation of the present disclosure. In the drawings,
Fig. 1 is a schematic diagram according to a first embodiment of the present disclosure;
Fig. 2 is a schematic diagram of an implementation system for embodiments of the present disclosure;
Fig. 3 is a schematic diagram of stage operations executed by a single-layer switch according to embodiments of the present disclosure;
Fig. 4 is a schematic diagram of internal composition of a switch according to embodiments of the present disclosure;
Fig. 5 is a schematic diagram of traffic reception and transmission of a single-layer switch according to embodiments of the present disclosure;
Fig. 6 is a schematic diagram according to a second embodiment of the present disclosure;
Fig. 7 is a schematic diagram of implementation process of ReduceScatter stage operation according to embodiments of the present disclosure;
Fig. 8 is an instruction interaction diagram corresponding to Fig. 7;
Fig. 9 is a schematic diagram of implementation process of AllGather stage operation according to embodiments of the present disclosure;
Fig. 10 is an instruction interaction diagram corresponding to Fig. 9;
Fig. 11 is a schematic diagram according to a third embodiment of the present disclosure;
Fig. 12 is a schematic diagram according to a fourth embodiment of the present disclosure;
Fig. 13 is a schematic diagram according to a fifth embodiment of the present disclosure; and
Fig. 14 is a schematic diagram of an electronic device for implementing the data processing method according to embodiments of the present disclosure.

### DETAILED DESCRIPTION OF EMBODIMENTS

The following part will illustrate exemplary embodiments of the present disclosure with reference to the drawings, including various details of the embodiments of the present disclosure for a better understanding. The embodiments should be regarded only as exemplary ones. Therefore, those skilled in the art should appreciate that various changes or modifications can be made with respect to the embodiments described herein without departing from the scope and spirit of the present disclosure. Similarly, for clarity and conciseness, the descriptions of the known functions and structures are omitted in the descriptions below.

For better understanding of the present disclosure, relevant terms are explained as follows:
Graphics Processing Unit (GPU): A microprocessor specifically designed for processing graphics and image-related computations. GPUs play an important role in artificial intelligence (AI). Deep learning algorithms (such as neural networks) involve large amounts of matrix operations and the parallel computing capability of GPUs is very suitable for processing these operations, therefore, GPUs are typically used as computing nodes in AI scenarios.

Load instruction and Store instruction: In GPU computing architecture, load/store instructions are fundamental and crucial operation instructions. Load instructions are used to read data from memory (such as global memory, shared memory, etc.) into GPU registers. As registers have high-speed read and write performance, storing data in registers facilitates efficient data processing. Store instructions are used to write data from registers to memory for subsequent use or further processing.

Load/store instructions can be further divided into requests and responses. For example, load instructions include: load requests and load responses, while store instructions include: store requests and store responses.

ScaleOut and ScaleUp: These are two different system scaling approaches.

ScaleOut (horizontal scaling): Also known as horizontal expansion, refers to expanding overall system performance and capacity by adding more nodes (such as servers, virtual machines, etc.). These nodes are relatively independent and communicate and collaborate through networks to jointly complete system tasks.

ScaleUp (vertical scaling): Also known as vertical expansion, refers to enhancing system processing capability by improving hardware performance of a single node (such as increasing CPU cores, expanding memory capacity, upgrading to faster hard drives, etc.).

GPU ScaleUp: A network architecture designed to achieve efficient expansion and collaborative work of GPU resources. It mainly improves computing capability by increasing the number of GPUs within a single node (such as adding multiple GPUs in one server).

AllReduce operation: A commonly used communication operation in distributed computing, mainly used for data reduction among multiple computing nodes. Specifically, in multiple nodes involved in AllReduce operation, each node has a piece of original data (local data). The AllReduce operation performs a specified reduction operation (such as sum, average, maximum, etc.) on the original data from all nodes to obtain reduced data (global data), then distributes the reduced data results to all nodes, so that all nodes have the same reduced data.

Based on AllReduce operations, gradient synchronization can be achieved.

Gradient synchronization is an important concept in distributed deep learning training.

In distributed deep learning training, multiple computing nodes (such as multiple servers, multiple GPUs, etc.) are typically used to train models in parallel. Each computing node calculates gradients of model parameters based on original data. Gradient synchronization refers to aggregating and integrating gradient information calculated on each computing node to maintain consistent gradients across all nodes, and then updating model parameters based on the synchronized gradients.

The AllReduce operation can be divided into two stages: the ReduceScatter stage and the AllGather stage.

ReduceScatter stage: Distributes data to various nodes for partial reduction. Specifically, each node divides the original data into multiple parts according to certain rules, performs reduction operations on each part of its data with corresponding parts from other nodes, obtaining local reduced data on each node.

AllGather stage: After obtaining local reduced data in the ReduceScatter stage, the AllGather stage aggregates local reduced data from each node to obtain global reduced data, ensuring each node has identical global reduced data.

Specifically, taking A and B as examples of multiple GPUs involved in AllReduce operation, both A and B can divide their original data into two parts. For example, data on A is represented as (a0, a1), and data on B is represented as (b0, b1).

In the ReduceScatter stage, each GPU obtains its corresponding local reduced data. Taking sum as the reduction operation, local reduced data on A would be a0+b0, and local reduced data on B would be a1+b1.

In the AllGather stage, local reduced data on each GPU is aggregated to obtain global reduced data, which is then distributed to each GPU. For example, the global reduced data is (a0+b0, a1+b1), after which both A and B store this global reduced data (a0+b0, a1+b1).

For example, assuming original data on A is (1, 2) and original data on B is (3, 4), taking sum as the reduction operation, in the ReduceScatter stage, local reduced data on A is (4), local reduced data on B is (6), and in the AllGather stage, after aggregation, the global reduced data is (4, 6). Therefore, the final result of the AllReduce operation is (4, 6), with both A and B storing this identical global reduced data (4, 6).

Ring algorithm: An algorithm for implementing AllReduce operations. It connects all nodes into a logical ring, where data is passed sequentially along the ring. Each node receives data from the previous node, performs reduction operations with its own data, and then passes it to the next node. After several rounds of circulation, each node obtains the reduction results of data from all nodes.

Based on the Ring algorithm, the ReduceScatter stage and AllGather stage are executed serially. When mainly considering transmission time, the total time cost formula for AllReduce operations is as follows:$T_AllReduce = T_ReduceScatter + T_AllGather = \left(\left(2\left(N-1\right)\right)/N\right) * \left(S/B\right)$
Where: T_AllReduce is the total time cost of AllReduce operation;
T_ReduceScatter is the time cost of ReduceScatter stage;
T_AllGather is the time cost of AllGather stage;
N is the total number of nodes involved in the AllReduce operation;
S is the data volume of original data on each node;
B is a network bandwidth.

Pipeline parallel: A parallel strategy that breaks down a complex computational task into multiple consecutive stages, like a pipeline in factory. Each stage processes a part of the task, and different stages can execute different batches of data in parallel to improve overall processing speed.

For example, the overall data can be divided into different batches, such as first data and second data. A first stage operation is executed on the first data to obtain a first stage result, then a second stage operation is executed on the first stage result of the first data. Meanwhile, during the execution of the second stage operation on the first stage result of the first data, a first stage operation can be executed on the second data in parallel. This way, executing different batches of data at different stages in parallel can improve overall processing speed.

Switches can be classified into single-layer switches and multi-layer switches.

Single-layer switch refers to a switch with a single-layer structure, typically referring to access layer switches.

Multi-layer switch refers to a switch with multiple layer structure. Taking two layers as an example, they can be called access layer switch and aggregation layer switch.

Access layer switch, represented as L0 switch, directly connects to GPUs in GPU scenarios and serves as the entry point for data into the network.

Aggregation layer switch, represented as L1 switch, is the upper-layer switch of access layer switches, aggregating and integrating traffic from multiple access layer switches.

To implement in-network computing, the present disclosure provides the following embodiments.

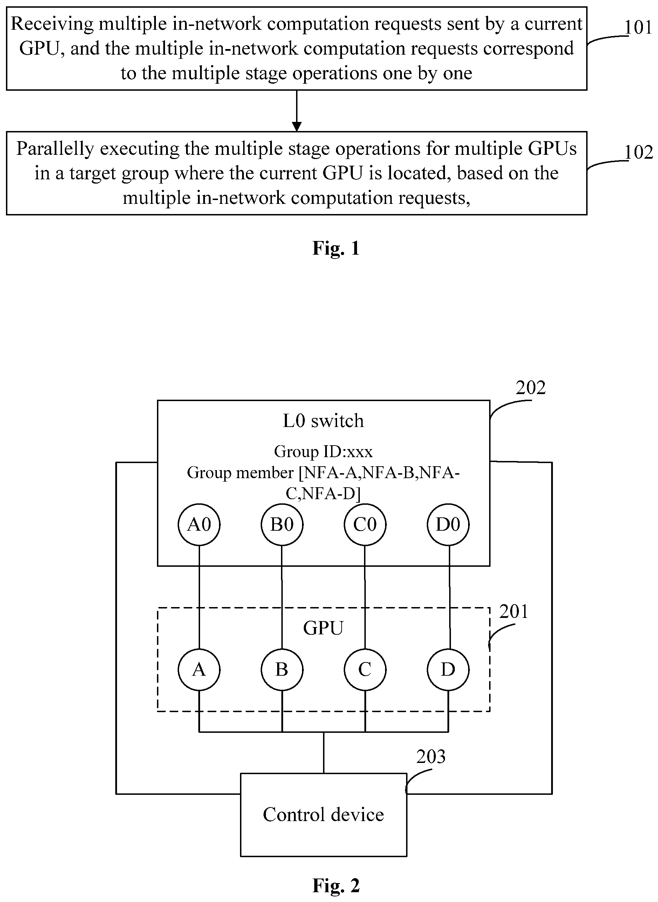

Fig. 1 is a schematic diagram according to a first embodiment of the present disclosure. This embodiment provides a data processing method, applied to a single-layer switch, which is configured to complete a target operation, and the target operation includes multiple stage operations. The method includes:
101. Receiving multiple in-network computation requests sent by a current GPU, where the multiple in-network computation requests correspond to the multiple stage operations one by one.
102. Based on the multiple in-network computation requests, parallelly executing the multiple stage operations for multiple GPUs in a target group where the current GPU is located.

The method is executed by a single-layer switch to implement in-network computing.

Single-layer switch refers to an access layer switch, i.e., L0 switch.

Target operation refers to the specific operation corresponding to in-network computing, which includes multiple stage operations.

For example, the target operation is an AllReduce operation, which includes ReduceScatter stage operation and AllGather stage operation.

In non-in-network computing scenarios, GPUs perform computations to complete target operations, such as multiple GPUs completing AllReduce operations based on the Ring algorithm.

In in-network computing scenarios, single-layer switches perform in-network computing to complete target operations.

Current GPU is the GPU that triggers in-network computing by the single-layer switch, which can be any GPU in a GPU cluster.

In-network computation request is an instruction used to trigger in-network computing by the single-layer switch.

For example, taking GPU A as an example, when A needs the single-layer switch to perform in-network computing, it may send an in-network computation request to the single-layer switch, which then performs in-network computing after receiving the request.

The target operation includes multiple stage operations, each stage operation can be triggered by an in-network computation request.

For example, if the target operation includes a first stage operation and a second stage operation, and in-network computation requests include a first in-network computation request and a second in-network computation request, then the single-layer switch executes the first stage operation after receiving the first in-network computation request, and executes the second stage operation after receiving the second in-network computation request.

To improve in-network computing performance, multiple stage operations are executed in parallel.

For example, based on the aforementioned AllReduce operation, ReduceScatter stage operation and AllGather stage operation are executed in parallel.

In this embodiment, in-network computing can be achieved through the single-layer switch executing target operations; furthermore, by executing multiple stage operations of the target operation in parallel, in-network computing efficiency can be improved, enhancing in-network computing performance.

To better understand the embodiments of the present disclosure, the application scenario is explained as follows.

Fig. 2 is a schematic diagram of an implementation system for the embodiments of the present disclosure.

As shown in Fig. 2, the system includes: multiple GPUs 201, a single-layer switch 202, and a control device 203.

Multiple GPUs 201 are used to form a target group corresponding to the target operations.

Single-layer switch 202, represented as L0 switch, connects to the multiple GPUs 201 and executes target operations on data from multiple GPUs 201.

Control device 203 connects to multiple GPUs 201 and single-layer switch 202, providing relevant information needed for target operations, such as group information.

Multiple GPUs are represented as A~D, forming the target group.

The single-layer switch includes multiple ports corresponding to multiple GPUs one to one.

For example, the single-layer switch includes ports A0~D0, connecting to A~D respectively.

After GPUs and L0 switch form a network topology, the control device can detect this topology and generate group information based on the topology.

Group information can record group identifiers (group IDs) and their corresponding group member information.

Group identifier uniquely identifies a group, for example, the group identifier for the target group containing A~D is represented as xxx.

Group member information can specifically be the Network Fabric Address (NFA) of group members, uniquely identifying each group member, such as NFA of A represented as NFA-A. Each port on the L0 switch can share the same group information.

After generating group information, the control device sends the group information to the L0 switch for data transmission by the L0 switch based on corresponding group information.

Additionally, the control device can send port information of the L0 switch to GPUs, allowing GPUs to interact with corresponding ports based on this port information. For example, A can interact with A0 based on NFA of A0.

Based on this, when a GPU (like A) needs in-network computing from the single-layer switch, A directly sends an in-network computation request to port A0 of the single-layer switch (like L0 switch), carrying the current group identifier (like xxx). Port A0 of the L0 switch determines corresponding group members (like A~D) based on this current group identifier, interacts with these GPUs, obtains original data from these GPUs, performs in-network computing on this original data to complete the target operation.

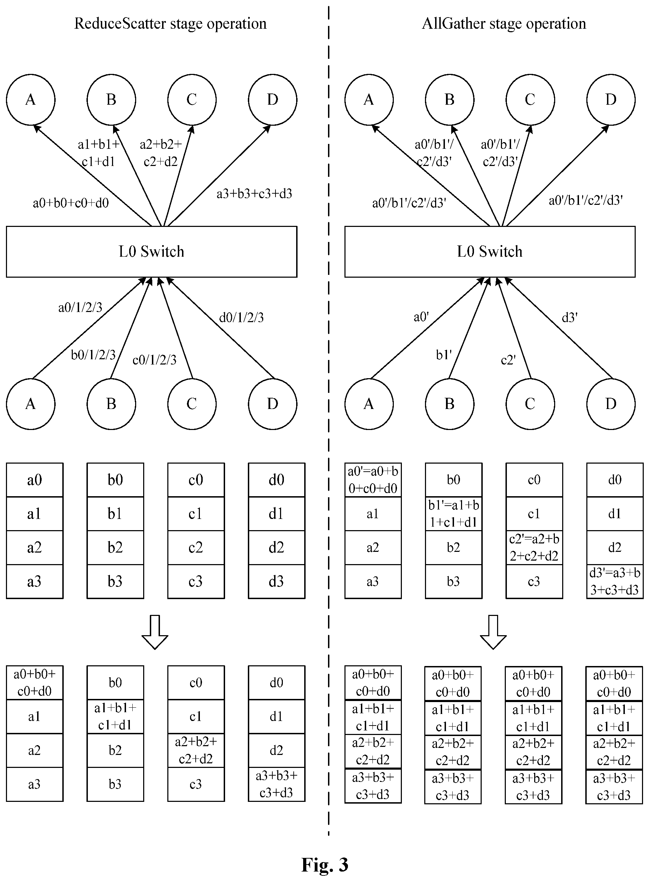

Fig. 3 is a schematic diagram of stage operations executed by the single-layer switch according to embodiments of the present disclosure. In this embodiment, the target operation is taken as an AllReduce operation.

AllReduce operation reduces original data from multiple GPUs. As shown in Fig. 3, taking 4 GPUs as an example, represented as A, B, C, and D.

Original data on each GPU is divided into N parts, where N is the total number of GPUs involved in the AllReduce operation. In this embodiment, N=4. Based on this, original data on A includes (a0, a1, a2, a3), original data on B includes (b0, b1, b2, b3), similar for C and D.

The AllReduce operation is divided into a ReduceScatter stage operation and a AllGather stage operation.

The ReduceScatter stage operation: Each GPU sends its N parts of original data to the L0 switch. For example, A sends its original data (a0, a1, a2, a3) to the L0 switch, represented as a0/1/2/3, B sends its original data (b0, b1, b2, b3) to the L0 switch, represented as b0/1/2/3, similar for C and D.

The L0 switch reduces (e.g., adds) each part of original data from different GPUs, obtaining N parts of local reduced data, and distributes them to each GPU.

For example, the 4 parts of local reduced data obtained by the L0 switch are: a0+b0+c0+d0, a1+b1+c1+d1, a2+b2+c2+d2, a3+b3+c3+d3; then, distributes one part to each GPU, e.g., sends a0+b0+c0+d0 to A for storage, sends a1+b1+c1+d1 to B for storage, similar for C and D.

The AllGather stage operation: Each GPU sends its one part of local reduced data to the L0 switch, the L0 switch aggregates local reduced data from different GPUs to obtain global reduced data, and distributes it to each GPU.

For example, local reduced data on A is represented as a0', A sends a0' to the L0 switch, B sends b1' to the L0 switch, similar for C and D.

The L0 switch aggregates these 4 parts of local reduced data to obtain global reduced data, represented as a0'/b1'/c2'/d3', then sends the global reduced data to each GPU, so each GPU stores identical global reduced data.

Where a0'=a0+b0+c0+d0, b1'=a1+b1+c1+d1, c2'=a2+b2+c2+d2, d3'=a3+b3+c3+d3, therefore, A~D all store identical global reduced data (a0+b0+c0+d0, a1+b1+c1+d1, a2+b2+c2+d2, a3+b3+c3+d3).

Thus, the AllReduce operation can be completed by executing the ReduceScatter stage operation and AllGather stage operation.

The above description outlined the specific operation process of the single-layer switch for each stage operation (such as ReduceScatter stage operation and AllGather stage operation). In implementation, these stage operations can be specifically executed by the ports of the single-layer switch.

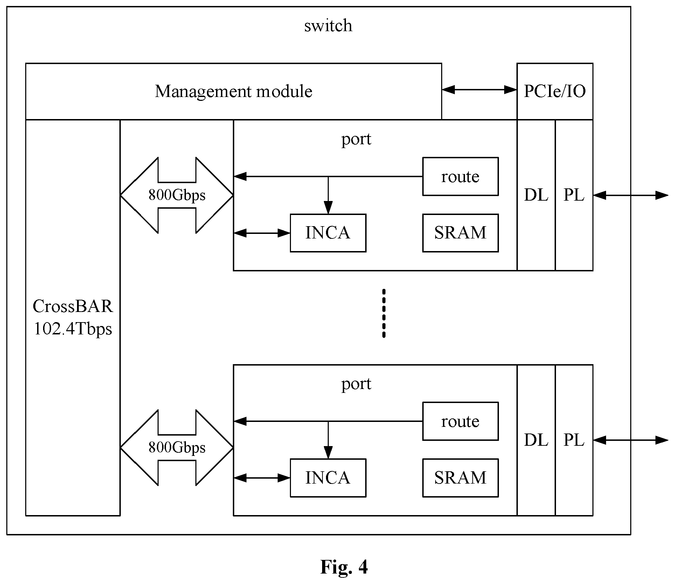

Fig. 4 is a schematic diagram of internal composition of a switch according to embodiments of the present disclosure.

As shown in Fig. 4, the switch includes ports, and may also include a management module, interface module, network transmission module, etc.

The management module, interface module, and network transmission module can be configured in conventional ways: the management module is used for switch configuration, monitoring, management, etc.; the interface module is used for communication with other devices, such as PCIe interface or other I/O interfaces, and the PCIe (Peripheral Component Interconnect Express) is a high-speed serial computer expansion bus standard that enables high-speed data transmission; the network transmission module is used for data transmission via network, including a Data Link (DL) layer and a Physical Link (PL) layer, where the PL layer is the physical layer for transmitting data through physical links, while the DL layer converts data received by the physical layer into data frames and processes based on data frames.

In addition to providing conventional routing functions, as shown in Fig. 4, the ports in this embodiment can also perform in-network computing. For example, In-Network Compute Accelerator (INCA) is included in the ports for performing in-network computing.

Additionally, ports may include memory, such as Static Random Access Memory (SRAM), for storing related data. SRAM is a type of memory with advantages like high speed and low power consumption.

In single-layer switch scenarios, each port connects to one GPU. For example, based on the aforementioned GPUs A~D, ports include A0~D0, connecting to A~D respectively.

Different ports communicate through an internal interconnection module, such as CrossBAR. CrossBAR is a switching structure composed of multiple input ports, multiple output ports, and a switch matrix. By controlling the switch states in the switch matrix, connections between any input port and output port can be established, thus completing data exchange and transmission. This structure supports simultaneous data transmission between multiple ports, is internally non-blocking, and can improve data processing efficiency.

The bandwidth between ports and CrossBAR is, for example, 800Gbps, and the internal bandwidth of CrossBAR is, for example, 102.4Tbps, where bps means bits per second.

In non-in-network computing scenarios, target operations are executed by GPUs. For example, when the target operation is an AllReduce operation, multiple GPUs can execute the AllReduce operation based on the Ring algorithm.

In in-network computing scenarios with single-layer switches, target operations are executed by the single-layer switch. For example, the single-layer switch executes AllReduce operations.

Furthermore, in in-network computing scenarios, ports of the single-layer switch execute target operations. When the target operation includes multiple stage operations, each port can send result data from each stage operation to its connected GPU.

For example, A0 performs in-network computing to obtain result data corresponding to A and send the result data to A; B0 performs in-network computing to obtain result data corresponding to B and sends the result data to B.

Distributed computing can be achieved by having each port calculate result data for corresponding GPUs, improving computation efficiency.

Combining the above explanation of the Ring algorithm, it serially executes the ReduceScatter stage operation and AllGather stage operation included in the AllReduce operation, resulting in a longer total time cost for the AllReduce operation.

To improve in-network computing performance, such as reducing the total time cost of target operations, the switch can execute multiple stage operations included in the target operation in parallel, such as parallel execution of ReduceScatter stage operation and AllGather stage operation.

When using L0 switch ports for in-network computing and executing multiple stage operations in parallel, the receiving and transmitting capabilities of the switch ports can be fully utilized, increasing the amount of parallel data transmission on ports, thereby reducing the time required for in-network computing and improving in-network computing performance.

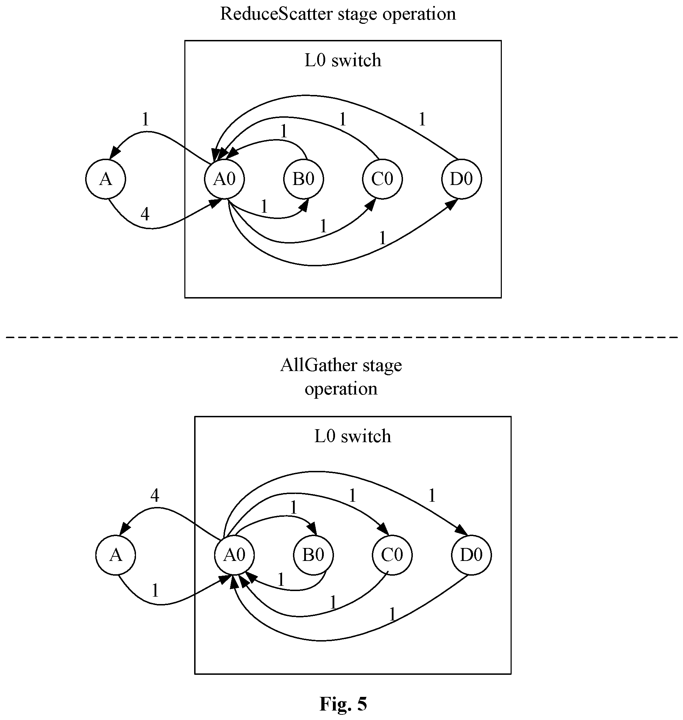

Fig. 5 is a schematic diagram of single-layer switch traffic flow according to embodiments of the present disclosure.

In this embodiment, assuming 4 GPUs (A, B, C, D) are connected to the L0 switch, port modules on the L0 switch corresponding to the 4 GPUs one by one are presented by A0, B0, C0, D0.

AllReduce operation including ReduceScatter and AllGather stage operations is taken as an example target operation.

As shown in Fig. 5, taking port A0 as an example, the traffic flow is as follows:
For ReduceScatter stage operation:
A0 receives 4 parts of data from A; then, A0 sends 1 part of data to each of B0~D0 and receives 1 part of data from each of B0~D0; A0 performs reduction on these data and sends 1 part of local reduced data to A.

Thus, in the ReduceScatter stage, on external interconnection between A0 and A, A0 receives 4 parts of data and sends 1 part of data.

For AllGather stage operation:
A0 receives 1 part of data from A and 1 part of data each from B~D through B0~D0; and A0 sends 1 part of data to each of B0~D0; then, A0 aggregates 1 part of data from each of A~D to obtain 4 parts of data (global reduced data) and sends the 4 parts of data to A

Thus, in the AllGather stage, on external interconnection between A0 and A, A0 receives 1 part of data and sends 4 parts of data.

Since ReduceScatter stage operation and AllGather stage operation are executed in parallel, the data volume transmitted on a single port module (like A0) of the L0 switch = 4+1 = 5 parts of data.

Generally, if N represents total number of GPUs and S represents original data volume per GPU, then data volume transmitted on a single port module of the L0 swithc = ((N+1)S)/N.

Therefore, total time cost of target operations: T_AllReduce = ((N+1)S)/(NB).

Referring to the Ring algorithm above, total time cost of AllReduce operation based on Ring algorithm is: T_AllReduce' = ((2(N-1))/N) * (S/B).

When N is large, T_AllReduce' is greater than T_AllReduce. Thus, this embodiment effectively reduces total time cost and improves in-network computing performance through parallel execution of multiple stage operations.

Additionally, as shown in Fig. 5, on internal interconnection of the L0 switch: in the ReduceScatter stage, A0 receives 3 parts of data and sends 3 parts of data; in the AllGather stage, A0 receives 3 parts of data and sends 3 parts of data.

Generally, in the ReduceScatter stage and the AllGather stage, a single port module of the L0 switch sends and receives (N-1) parts of data on internal interconnection, where N is the total number of GPUs. When the ReduceScatter stage and the AllGather stage are executed in parallel, the internal interconnection data volume = 2*(N-1) parts of data.

With reference to the above description, the external interconnection data volume = (N+1) parts of data.

To ensure internal data transmission completes after external data transmission, internal interconnection bandwidth of the L0 switch should be (2(N-1))/(N+1) times of the external interconnection bandwidth. When N is large, this ratio approaches 2, thus the internal interconnection bandwidth of the L0 switch should be at least twice of the external interconnection bandwidth.

Based on the above application scenario, the present disclosure provides the following embodiment.

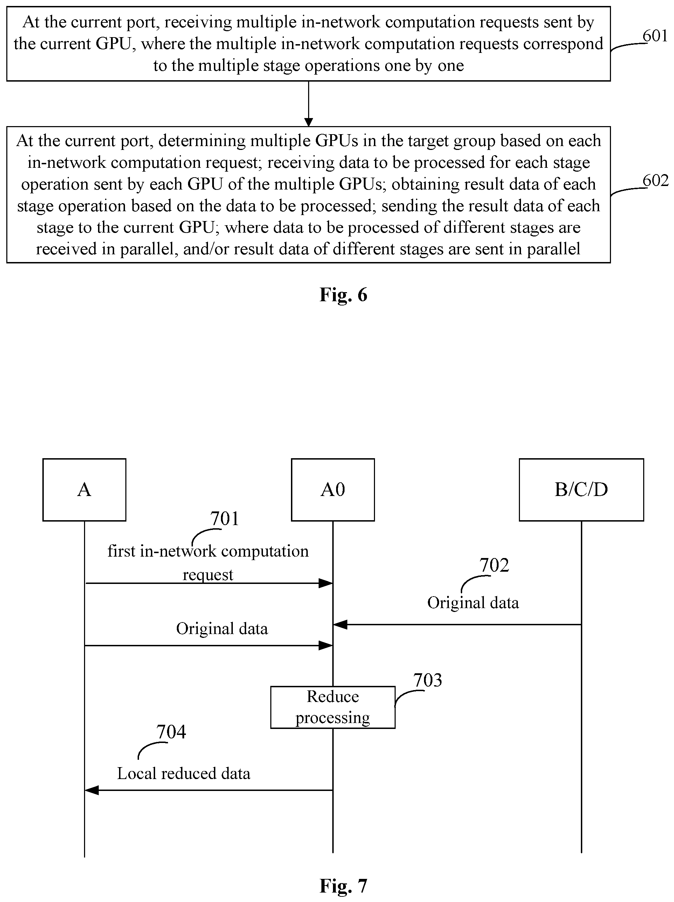

Fig. 6 is a schematic diagram according to a second embodiment. This embodiment provides a data processing method applied to a single-layer switch for completing target operations including multiple stage operations.

During in-network computing, computation is performed by the single-layer switch, specifically the computation is performed by the ports on the single-layer switch in this embodiment.

As shown in Fig. 6, the method includes:
601. At the current port, receiving multiple in-network computation requests sent by the current GPU, where the multiple in-network computation requests correspond to the multiple stage operations one by one.

Where the current port is a port connected to the current GPU, for example, if the current GPU is A, the current port is A0.

602. At the current port: determining multiple GPUs in the target group based on each in-network computation request; receiving data to be processed for each stage operation sent by each GPU of the multiple GPUs; obtaining result data of each stage operation based on the data to be processed; sending the result data of each stage to the current GPU; where data to be processed of different stages are received in parallel, and/or result data of different stages are sent in parallel.

For each stage operation, the main process includes: receiving data, processing data, and sending data. Since the time cost of each stage operation is mainly in the transmission process, to reduce the total time cost of target operations, the receiving and sending processes of different stages can be executed in parallel.

Taking two stage operations as example, at the current port:
Receive a first in-network computation request and a second in-network computation request;
Determine multiple GPUs in target group based on the first in-network computation request; receive data to be processed for a first stage operation from each GPU of the multiple GPUs; obtain result data of the first stage operation based on the data to be processed; and send the result data of the first stage operation to the current GPU;
Determine multiple GPUs in target group based on the second in-network computation request; receive data to be processed for a second stage operation from each GPU of the multiple GPUs; obtain result data of the second stage operation based on the data to be processed; and send the result data of the second stage operation to the current GPU;
Where the data to be processed for the first stage operation and the data to be processed for the second stage operation are received in parallel, and/or the result data of the first stage operation and the data to be processed for the second stage operation are sent in parallel.

Specifically, for example, if the first stage operation is a ReduceScatter stage operation and the current GPU is A, then the data to be processed for the first stage operation includes: original data from each GPU, such as original data of A (a0,a1,a2,a3).

Since the first stage operation corresponds to reduction processing, it specifically performs reduction processing on these original data to obtain local reduced data of current GPU as the result data of the first stage operation.

After obtaining the result data of the first stage operation, the result data is sent to the current GPU. For example, send local reduced data of A (a0+b0+c0+d0) to A.

If the second stage operation is an AllGather stage operation and the current GPU is A, then the data to be processed for the second stage operation includes local reduced data from each GPU, such as local reduced data of A (a0+b0+c0+d0).

Since the second stage operation corresponds to aggregation processing, it specifically performs aggregation processing on these local reduced data to obtain global reduced data as the result data of the second stage operation.

After obtaining the result data of the second stage operation, the result data is sent to the current GPU. For example, global reduced data (a0+b0+c0+d0, a1+b1+c1+d1, a2+b2+c2+d2, a3+b3+c3+d3) is sent to A.

To reduce total time cost of the target operation, receiving and sending operations during different stages can be executed in parallel at each port.

For example, based on the above AllReduce operation, the first stage operation is ReduceScatter stage operation, the second stage operation is AllGather stage operation.

Referring to Fig. 5, multiple GPUs corresponding to the AllReduce operation include A, B, C, D. Assuming port connected to A is represented as A0, taking A0 as an example, in the receiving direction of A0: the data to be processed for ReduceScatter stage operation is original data of A, total N (e.g., N=4) parts of data; the data to be processed for AllGather stage operation is local reduced data of A, total 1 part of data. Therefore, in the receiving direction, there are total 4+1=5 parts of data.

In the sending direction of A0: the result data of ReduceScatter stage operation is local reduced data of A, total 1 part of data; the result data of AllGather stage operation is global reduced data, total N (e.g., N=4) parts of data. Therefore, in the sending direction, there are total 4+1=5 parts of data.

This way, data for multiple stage operations are included in the receiving and sending directions of each port, fully utilizing the single-layer switch ports' receiving and sending capabilities, improving processing efficiency.

Additionally, the specific parallel strategy for ReduceScatter stage operation and AllGather stage operation can be pipeline parallel, where different batches of data are processed in parallel at different stages. Taking the receiving direction of A0 as an example, N parts of data involved in the first stage operation and 1 part of data involved in the second stage operation are specifically different batches of data, such as N parts of data for X and 1 part of data for Y, where X and Y are different batches of data.

This ensures data processing accuracy and improves overall reliability of in-network computing.

In this embodiment, parallel receiving and sending of data for multiple stage operations at each port of the single-layer switch fully utilizes port capabilities of receiving and sending, improving in-network computing efficiency.

Below, taking AllReduce operation as an example of the target operation, describes specific implementation processes of ReduceScatter stage operation and AllGather stage operation included in AllReduce operation.

The in-network computation request corresponding to the ReduceScatter stage operation is called a first in-network computation request, and the in-network computation request corresponding to the AllGather stage operation is called a second in-network computation request.

For the ReduceScatter stage operation, the data to be processed includes: original data on each GPU; and the result data includes local reduced data corresponding to the current GPU.

For the AllGather stage operation, the data to be processed includes: local reduced data corresponding to each GPU; and the result data includes: global reduced data.

With reference to the above description, the target operation can be specifically implemented by ports on a single-layer switch.

Assuming the current GPU is A, the target operation can be specifically implemented by the current port A0 connected to A. Below describes implementation processes of the ReduceScatter stage operation and the AllGather stage operation using A0 as an example.

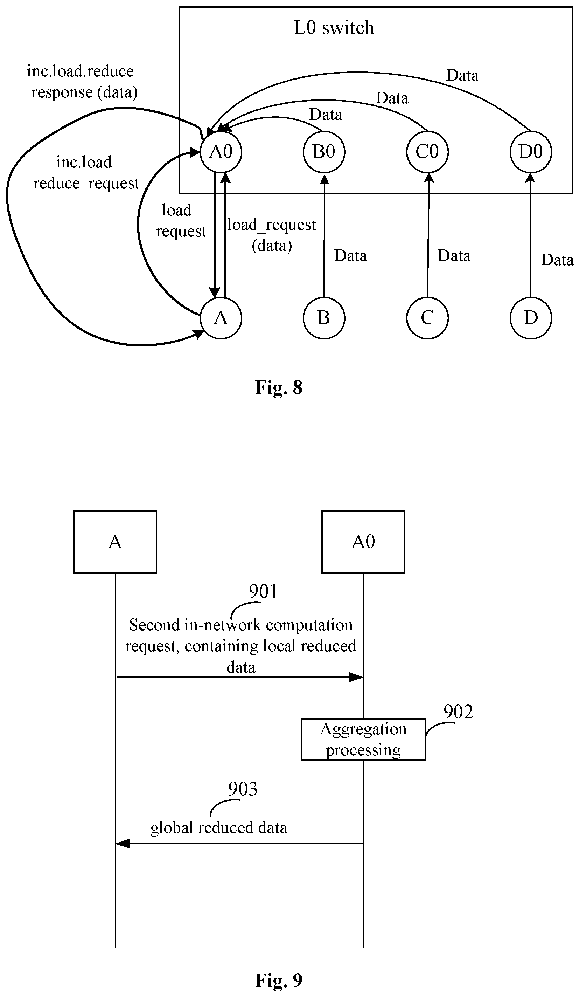

Fig. 7 is a schematic diagram of the ReduceScatter stage operation implementation process. Fig. 8 is instruction interaction diagram corresponding to Fig. 7.

701. A sends the first in-network computation request to A0.

Where the first in-network computation request triggers execution of the ReduceScatter stage operation.

Referring to Fig. 8, the first in-network computation request can be represented as inc.load.reduce_request.

702. A0 receives original data from each of GPUs in a target group where the current GPU is located based on the first in-network computation request.

After receiving the first in-network computation request, A0 can determine multiple GPUs in the target group (like A~D) based on the current group identifier (like xxx) included in the first in-network computation request and a pre-established correspondence between group identifiers and group members.

In this embodiment, group members can be efficiently determined based on the current group identifier carried in the in-network computation request, enabling efficient subsequent communication and operations.

Then, A0 can interact with multiple GPUs in the target group to obtain original data from each GPU.

Specifically, A0 can interact with each GPU through respective connected downstream ports. For example, A0 interacts with A directly, and interacts with B through B0, etc.

Furthermore, L0 switch and GPUs can interact through load instructions.

For example, as shown in Fig. 8, A0 sends a load request (load_request) to A to trigger A to feedback original data.

Additionally, A0 can send load requests to other GPUs through other ports, for example, A0 send a load request to B through B0.

After receiving the load requests, each GPU can send a load response (load_response) to a corresponding port, carrying corresponding original data.

For example, as shown in Fig. 8, A sends a load response (load_response) to A0, carrying original data of A, such as (a0,a1,a2,a3).

Similarly, other GPUs can send their original data to corresponding ports, like B sending its original data (b0,b1,b2,b3) to B0.

703. A0 performs reduction processing on original data from each GPU to obtain local reduced data of A.

Where A0 can obtain corresponding data for reduction from the original data of A, like a0, receive reduced data from other ports, like b0 from B0, c0 from C0, d0 from D0.

A0 performs reduction based on these data to obtain local reduced data of A.

For example, if reduction processing is addition, local reduced data of A calculated by A0 is (a0+b0+c0+d0).

704. A0 sends the local reduced data to A.

Specifically, as shown in Fig. 8, A0 can send a first in-network computation response (inc.load.reduce_response) to A, carrying the local reduced data of A, like (a0+b0+c0+d0).

In this embodiment, the above process accurately and efficiently implements ReduceScatter stage operation in single-layer switch scenarios.

Furthermore, load instructions enable simple and efficient interaction between L0 switch and GPUs.

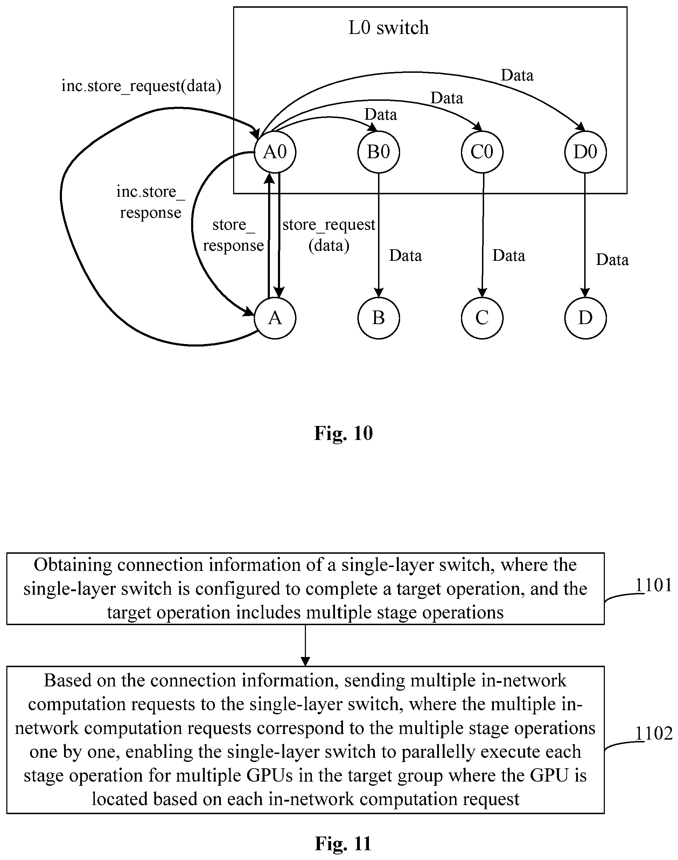

Fig. 9 is a schematic diagram of AllGather stage operation implementation process. Fig. 10 is instruction interaction diagram corresponding to Fig. 9.

As shown in Fig. 9, the method includes:
901. A sends a second in-network computation request to A0, containing local reduced data of A.

Where the second in-network computation request triggers execution of AllGather stage operation.

Referring to Fig. 10, the second in-network computation request can be represented as inc.store_request, containing the local reduced data of A, like (a0+b0+c0+d0).

902. A0 performs aggregation processing on the local reduced data sent by each GPU in the target group to obtain global reduced data.

Where the second in-network computation request contains local reduced data, for example, the second in-network computation request sent by A contains local reduced data of A, such as (a0+b0+c0+d0), the second in-network computation request sent by B contains local reduced data of B, such as (a1+b1+c1+d1), then A0 can receive local reduced data of B from B0.

This way, A0 can obtain local reduced data from each GPU through respective second in-network computation requests, aggregate these data to obtain global reduced data, such as (a0+b0+c0+d0,a1+b1+c1+d1,a2+b2+c2+d2,a3+b3+c3+d3).

Additionally, A0 can send the local reduced data of A to B0~D0 for similar processing with A0 to obtain global reduced data respectively.

903. A0 sends the global reduced data to A.

Furthermore, L0 switch and GPUs can interact through store instructions.

For example, as shown in Fig. 10, A0 sends a store request (store_request) to A, carrying global reduced data.

Above explanation uses A0 as an example. Similarly, after B0 obtains global reduced data, it can carry the global reduced data in the store request and send it to B, allowing each GPU to obtain identical global reduced data.

Additionally, GPUs can respond after receiving the store requests.

For example, as shown in Fig. 10, A sends a store response (store_response) to A0 indicating that its GPU has completed the target operation, B sends a store response (store_response) to B0 indicating that its GPU has completed the target operation, then B0 can send a store response to A0. After A0 receives responses from all GPUs, it sends the second in-network computation response (inc.store_response) to A indicating completion of overall target operation.

In this embodiment, the above process accurately and efficiently implements AllGather stage operation in single-layer switch scenarios.

Furthermore, store instructions enable simple and efficient interaction between L0 switch and GPUs.

Fig. 11 is a schematic diagram according to a third embodiment of the present disclosure. This embodiment provides a data processing method applied to GPU, including:

1101. Obtaining connection information of a single-layer switch, where the single-layer switch is configured to complete a target operation, and the target operation includes multiple stage operations.

1102. Based on the connection information, sending multiple in-network computation requests to the single-layer switch, where the multiple in-network computation requests correspond to the multiple stage operations one by one, enabling the single-layer switch to parallelly execute each stage operation for multiple GPUs in the target group where the GPU is located based on each in-network computation request.

In in-network computing scenarios, a GPU can send in-network computation request to the single-layer switch to trigger the single-layer switch to perform in-network computing.

GPU can specifically send the in-network computation request according to connection information.

Connection information may specifically be address information of the port connected to the GPU, so the in-network computation request can be sent to that port.

After receiving multiple in-network computation requests, the single-layer switch parallelly executes multiple stage operations for multiple GPUs in the group where the GPU is located. For specific execution process of the single-layer switch, refer to above related embodiments.

In this embodiment, from perspective of a GPU, the GPU doesn't need to be aware of whole network architecture or whole data transmission process. GPU only needs to send an in-network computation request to trigger execution of in-network computing, and during computation process, use load/store instructions to interact with the single-layer switch, making GPU implementation simple and feasible.

In some embodiments, the multiple in-network computation requests are sent to current port connected to the GPU, enabling single-layer switch to execute:
At the current port, determining multiple GPUs in the target group based on each in-network computation request; receiving data to be processed for each stage operation from each GPU; obtaining result data of each stage operation based on the data to be processed; sending the result data of each stage to the current GPU; where the data to be processed of different stage operations are received in parallel, and/or result data of different stage operations are sent in parallel.

In this embodiment, parallel receiving and sending of data for multiple stage operations at each port of the single-layer switch fully utilizes port capabilities of sending and receiving, improving in-network computing efficiency.

In some embodiments, each in-network computation request contains a current group identifier of the target group, enabling the single-layer switch to determine group members corresponding to the current group identifier as multiple GPUs based on a pre-established correspondence between group identifiers and group members.

In this embodiment, group members can be simply and efficiently determined based on current group identifier carried in in-network computation request, enabling efficient subsequent communication and operations.

In some embodiments, the target operation is AllReduce operation;

The AllReduce operation includes: ReduceScatter stage operation;

The data to be processed includes: original data from each GPU;

The result data includes: local reduced data of the current GPU;

The each in-network computation request triggers the single-layer switch to perform reduction processing based on original data from each GPU to obtain the local reduced data corresponding to the current GPU.

In this embodiment, the above process accurately and efficiently implements the ReduceScatter stage operation in single-layer switch scenarios.

In some embodiments, the method further includes:
Receiving a load request sent by the single-layer switch and sending a load response to the single-layer switch, where the load response contains original data of the GPU.

In this embodiment, load instructions enable simple and efficient interaction between L0 switch and GPUs.

In some embodiments, the target operation is AllReduce operation;

The multiple stage operations include: AllGather stage operation;

The data to be processed includes: local reduced data from each GPU;

The current result data includes: global reduced data;

The each in-network computation request triggers the single-layer switch to perform aggregation processing on local reduced data from each GPU to obtain the global reduced data.

In this embodiment, the above process accurately and efficiently implements AllGather stage operation in single-layer switch scenarios.

In some embodiments, the method further includes:
Receiving a storage request sent by the single-layer switch, where the storage request contains the global reduced data.

In this embodiment, store instructions enable simple and efficient interaction between L0 switch and GPUs.

For specific implementation details, refer to related descriptions in above embodiments.

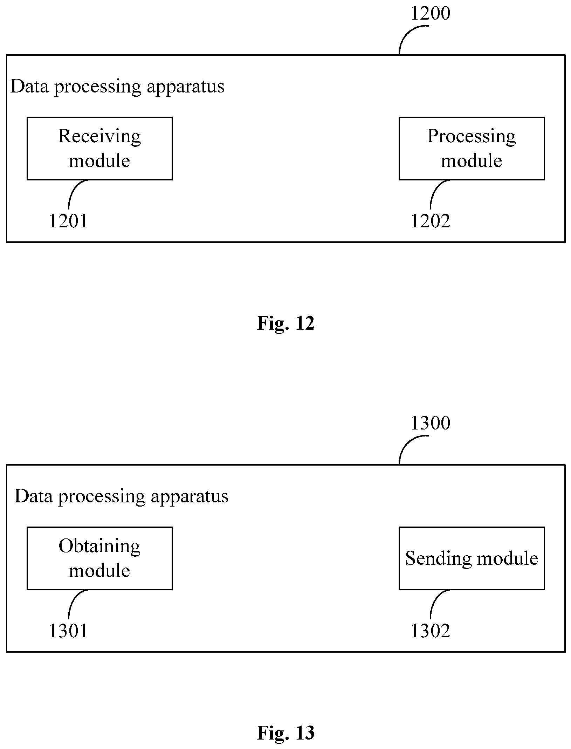

Fig. 12 is a schematic diagram according to a fourth embodiment of the present disclosure. This embodiment provides a data processing apparatus 1200, applied to a single-layer switch, where the single-layer switch is configured to complete a target operation, the target operation includes multiple stage operations, and the apparatus includes: a receiving module 1201 and a processing module 1202.

The receiving module 1201 is configured to receive multiple in-network computation requests sent by a current GPU, where the multiple in-network computation requests correspond to multiple stage operations one by one; the processing module 1202 is configured to parallelly execute the multiple stage operations for multiple GPUs in a target group where current GPU is located according to the multiple in-network computation requests.

Where this method is performed by a single-layer switch to implement in-network computing.

The single-layer switch refers to access layer switch, i.e., L0 switch.

A target operation refers to specific operation corresponding to in-network computing, which includes multiple stage operations.

For example, a target operation is AllReduce operation, including ReduceScatter stage operation and AllGather stage operation.

In non-in-network computing scenarios, GPUs perform computations to complete the target operations, for example, multiple GPUs complete AllReduce operations based on a Ring algorithm.

In in-network computing scenarios, the single-layer switch performs in-network computing to complete target operations.

The current GPU is the GPU triggering in-network computing by single-layer switch, which may be any one GPU in the GPU cluster.

The in-network computation request is an instruction triggering in-network computing by single-layer switch.

For example, taking GPU A as an example, when A needs the single-layer switch to perform in-network computing, A can send an in-network computation request to the single-layer switch, which then performs in-network computing after receiving the in-network computation request.

The target operation includes multiple stage operations, each stage operation can be triggered by an in-network computation request.

For example, the target operation includes a first stage operation and a second stage operation, and the in-network computation requests include a first in-network computation request and a second in-network computation request, then the single-layer switch executes a first stage operation after receiving the first in-network computation request, and executes a second stage operation after receiving the second in-network computation request.

To improve in-network computing performance, multiple stage operations are executed in parallel.

For example, based on aforementioned AllReduce operation, ReduceScatter stage operation and AllGather stage operation are executed in parallel.

In this embodiment, in-network computing can be achieved through the single-layer switch executing target operations; furthermore, by executing multiple stage operations of target operation in parallel, in-network computing efficiency can be improved and in-network computing performance is improved.

In some embodiments, the multiple in-network computation requests are received by a current port connected to the current GPU; and the processing module 1202 is further configured to:
At the current port, determine multiple GPUs in a target group based on each in-network computation request; receive data to be processed for each stage operation from each GPU of the multiple GPUs; obtain result data of each stage operation based on the data to be processed; send the result data of each stage to the current GPU;

Where the data to be processed of different stage operations are received in parallel, and/or result data of different stage operations are sent in parallel.

In this embodiment, parallel receiving and sending of data for multiple stage operations at each port fully utilizes port capabilities of sending and receiving, improving in-network computation efficiency.

In some embodiments, each in-network computation request contains a current group identifier of the target group; and the processing module 1202 is further configured to:
Determine group members corresponding to the current group identifier as the multiple GPUs based on a pre-established correspondence between group identifiers and group members.

In this embodiment, the group members can be simply and efficiently determined based on the current group identifier carried in the in-network computation request, enabling efficient subsequent communication and operations.

In some embodiments, the target operation is AllReduce operation;

The AllReduce operation includes: ReduceScatter stage operation;

The data to be processed includes: original data from each GPU;

The result data includes: local reduced data of the current GPU;

The processing module 1202 is further configured to:
Perform reduction processing based on original data from each GPU to obtain local reduced data of the current GPU.

In this embodiment, the above process accurately and efficiently implements ReduceScatter stage operation in single-layer switch scenarios.

In some embodiments, the processing module 1202 is further configured to:
Send a load request to each GPU, where the load request trigger each GPU to send original data;
Receive a load response sent by each GPU, where the load response contains original data from each GPU.

In this embodiment, load instructions enable simple and efficient interaction between L0 switch and GPUs.

In some embodiments, the processing module 1202 is further configured to:
Perform aggregation processing on local reduced data from each GPU to obtain global reduced data.

In this embodiment, the above process accurately and efficiently implements AllGather stage operation in single-layer switch scenarios.

In some embodiments, the processing module 1202 is further configured to:
Send a storage request to the current GPU, where the storage request contains global reduced data.

In this embodiment, store instructions enable efficient interaction between L0 switch and GPUs.

Fig. 13 is a schematic diagram according to a fifth embodiment. This embodiment provides a data processing apparatus 1300 applied to GPU, including: an obtaining module 1301 and a sending module 1302.

The obtaining module 1301 is configured to obtain connection information of the single-layer switch; where the single-layer switch is configured to complete the target operation including multiple stage operations; the sending module 1302 is configured to send multiple in-network computation requests to the single-layer switch based on the connection information, where the multiple in-network computation requests correspond to the multiple stage operations one to one, enabling the single-layer switch parallelly executing the multiple stage operations for the multiple GPUs in the target group where the current GPU is located, based on the multiple in-network computation requests.

In in-network computing scenarios, GPU can send in-network computation requests to trigger single-layer switch performing the in-network computing.

GPU can send the in-network computation request according to connection information.

The connection information can be address information of the port connected with the GPU, so the in-network computation request can be sent to that port.

After receiving multiple in-network computation requests, the single-layer switch parallelly executes multiple stage operations for GPUs in group where the GPU is located. For the specific execution flow of the single-layer switch, refer to the relevant embodiments above.

In this embodiment, from the perspective of GPU, it doesn't need to be aware of the whole network architecture or the whole data transmission process, GPU only needs to send an in-network computation to the single-layer switch to trigger the execution of in-network computation, and during the computation procedure, interact using load/store instructions with the single-layer switch, making GPU implementation simple.

In some embodiments, the multiple in-network computation requests are sent to a current port of the single-layer switch connected to GPU, enabling the single-layer switch to:
At the current port, determining the multiple GPUs in the target group based on each in-network computation request; receiving data to be processed for each stage operation sent by each GPU of the multiple GPUs; obtaining result data of each stage operation based on the data to be processed; sending the result data of each stage to the current GPU; where data to be processed of different stage operations are received in parallel, and/or result data of different stage operations are sent in parallel

In this embodiment, parallel receiving and sending of data for multiple stage operations at each port of the single-layer switch fully utilizes port capabilities of receiving and sending, improving in-network computing efficiency.

In some embodiments, each in-network computation request contains a current group identifier of the target group; the each in-network computation request trigger the single-layer switch to determine group members corresponding to the current group identifier as multiple GPUs based on a pre-established correspondence between group identifiers and group members.

In this embodiment, the group members can be efficiently determined based on the current group identifier carried in in-network computation requests, enabling efficient subsequent communication and operations.

In some embodiments, the target operation is AllReduce operation;

The AllReduce operation includes: ReduceScatter stage operation;

The data to be processed includes: original data from each GPU;

The result data includes: local reduced data of the current GPU;

The each in-network computation request triggers the single-layer switch to perform reduction processing based on original data from each GPU to obtain the local reduced data corresponding to the current GPU.

In this embodiment, the above process accurately and efficiently implements the ReduceScatter stage operation in single-layer switch scenarios.

In some embodiments, the apparatus 1300 further includes:
A feedback module, configured to receive a load request sent by the single-layer switch and send a load response to the single-layer switch, where the load response contains the original data of the GPU.

In this embodiment, load instructions enable simple and efficient interaction between L0 switch and GPUs.

In some embodiments, the target operation is AllReduce operation;

The multiple stage operations include: AllGather stage operation;

The data to be processed includes: local reduced data from each GPU;

The current result data includes: global reduced data;

The each in-network computation request triggers the single-layer switch to perform aggregation processing on local reduced data from each GPU to obtain the global reduced data.

In this embodiment, the above process accurately and efficiently implements AllGather stage operation in single-layer switch scenarios.

In some embodiments, the apparatus 1300 further includes:
A receiving module, configured to receive a storage request sent by the single-layer switch, where the storage request contains the global reduced data.

In this embodiment, store instructions enable simple and efficient interaction between L0 switch and GPUs.

It should be understood that in the embodiments of this disclosure, similar or identical content in different embodiments can reference each other.

It should be understood that, the terms like "first", "second" are only for distinction, not indicating importance or sequence.

It should be understood that, unless specially restricted, sequence of steps in processes indicates non-limiting temporal relationships.

In the technical solution of the present disclosure, collection, storage, use, processing, transmission, provision and disclosure of personal information comply with relevant laws and regulations and do not violate public order and morals

According to embodiments of the present disclosure, an electronic device, readable storage medium and computer program product are also provided.

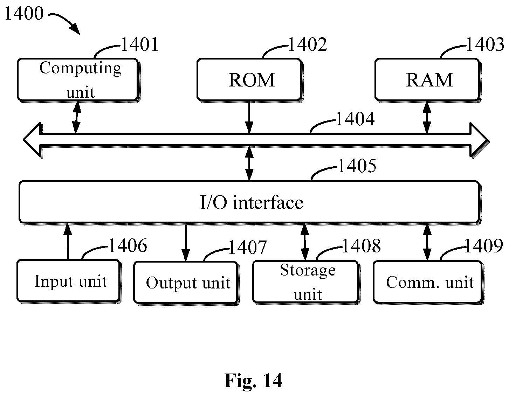

Fig. 14 shows a schematic block diagram of an electronic device 1400 which may be configured to implement the embodiment of the present disclosure. The electronic device 1400 is intended to represent various forms of digital computers, such as laptop computers, desktop computers, workstations, servers, blade servers, mainframe computers, and other appropriate computers. The electronic device may also represent various forms of mobile devices, such as personal digital assistants, cellular telephones, smart phones, wearable devices, and other similar computing devices. The components shown herein, their connections and relationships, and their functions, are meant to be exemplary only, and are not meant to limit implementation of the present disclosure described and/or claimed herein.

As shown in Fig. 14, the electronic device 1400 includes a computing unit 1401 which may perform various appropriate actions and processing operations according to a computer program stored in a read only memory (ROM) 1402 or a computer program loaded from a storage unit 1408 into a random access memory (RAM) 1403. Various programs and data necessary for the operation of the device 1400 may be also stored in the RAM 1403. The computing unit 1401, the ROM 1402, and the RAM 1403 are connected with one other through a bus 1404. An input/output (I/O) interface 1405 is also connected to the bus 1404.

The plural components in the electronic device 1400 are connected to the I/O interface 1405, and include: an input unit 1406, such as a keyboard, a mouse, or the like; an output unit 1407, such as various types of displays, speakers, or the like; the storage unit 1408, such as a magnetic disk, an optical disk, or the like; and a communication unit (comm. unit) 1409, such as a network card, a modem, a wireless communication transceiver, or the like. The communication unit 1409 allows the device 1400 to exchange information/data with other devices through a computer network, such as the Internet, and/or various telecommunication networks.

The computing unit 1401 may be a variety of general and/or special purpose processing components with processing and computing capabilities. Some examples of the computing unit 1401 include, but are not limited to, a central processing unit (CPU), a graphic processing unit (GPU), various dedicated artificial intelligence (AI) computing chips, various computing units running machine learning model algorithms, a digital signal processor (DSP), and any suitable processor, controller, microcontroller, or the like. The computing unit 1401 performs the methods and processing operations described above, such as the large model-based target sequence generation method. For example, in some embodiments, the large model-based target sequence generation method may be implemented as a computer software program tangibly contained in a machine readable medium, such as the storage unit 1408. In some embodiments, part or all of the computer program may be loaded and/or installed into the device 1400 via the ROM 1402 and/or the communication unit 1409. When the computer program is loaded into the RAM 1403 and executed by the computing unit 1401, one or more steps of the method according to the present disclosure may be performed. Alternatively, in other embodiments, the computing unit 1401 may be configured to perform the large model-based target sequence generation method according to the present disclosure by any other suitable means (for example, by means of firmware).

Various implementations of the systems and technologies described herein above may be implemented in digital electronic circuitry, integrated circuitry, field programmable gate arrays (FPGA), application specific integrated circuits (ASIC), application specific standard products (ASSP), systems on chips (SOC), complex programmable logic devices (CPLD), computer hardware, firmware, software, and/or combinations thereof. The systems and technologies may be implemented in one or more computer programs which are executable and/or interpretable on a programmable system including at least one programmable processor, and the programmable processor may be special or general, and may receive data and instructions from, and transmit data and instructions to, a storage system, at least one input device, and at least one output device.

Program codes for implementing the method according to the present disclosure may be written in any combination of one or more programming languages. These program codes may be provided to a processor or a controller of a general purpose computer, a special purpose computer, or other programmable data processing apparatuses, such that the program code, when executed by the processor or the controller, causes functions/operations specified in the flowchart and/or the block diagram to be implemented. The program code may be executed entirely on a machine, partly on a machine, partly on a machine as a stand-alone software package and partly on a remote machine, or entirely on a remote machine or a server.

In the context of the present disclosure, the machine readable medium may be a tangible medium which may contain or store a program for use by or in connection with an instruction execution system, apparatus, or device. The machine readable medium may be a machine readable signal medium or a machine readable storage medium. The machine readable medium may include, but is not limited to, an electronic, magnetic, optical, electromagnetic, infrared, or semiconductor system, apparatus, or device, or any suitable combination of the foregoing. More specific examples of the machine readable storage medium may include an electrical connection based on one or more wires, a portable computer disk, a hard disk, a random access memory (RAM), a read only memory (ROM), an erasable programmable read only memory (EPROM or flash memory), an optical fiber, a portable compact disc read only memory (CD-ROM), an optical storage device, a magnetic storage device, or any suitable combination of the foregoing.

To provide interaction with a user, the systems and technologies described here may be implemented on a computer having: a display device (for example, a cathode ray tube (CRT) or liquid crystal display (LCD) monitor) for displaying information to a user; and a keyboard and a pointing device (for example, a mouse or a trackball) by which a user may provide input for the computer. Other kinds of devices may also be used to provide interaction with a user; for example, feedback provided for a user may be any form of sensory feedback (for example, visual feedback, auditory feedback, or tactile feedback); and input from a user may be received in any form (including acoustic, speech or tactile input).

The systems and technologies described here may be implemented in a computing system (for example, as a data server) which includes a back-end component, or a computing system (for example, an application server) which includes a middleware component, or a computing system (for example, a user computer having a graphical user interface or a web browser through which a user may interact with an implementation of the systems and technologies described here) which includes a front-end component, or a computing system which includes any combination of such back-end, middleware, or front-end components. The components of the system may be interconnected through any form or medium of digital data communication (for example, a communication network). Examples of the communication network include: a local area network (LAN), a wide area network (WAN) and the Internet.

A computer system may include a client and a server. Generally, the client and the server are remote from each other and interact through the communication network. The relationship between the client and the server is generated by virtue of computer programs which run on respective computers and have a client-server relationship to each other. The server may be a cloud server, also known as cloud computing server or cloud host, is a host product in the cloud computing service system, to solve the traditional physical host and VPS service (" Virtual Private Server ", or referred to as "VPS"), in the management difficulty, weak business scalability defects. The server may also be a server for a distributed system, or a server that combines blockchain.

It should be understood that various forms of the flows shown above may be used and reordered, and steps may be added or deleted. For example, the steps described in the present disclosure may be executed in parallel, sequentially, or in different orders, which is not limited herein as long as the desired results of the technical solution disclosed in the present disclosure may be achieved.

The above-mentioned implementations are not intended to limit the scope of the present disclosure. It should be understood by those skilled in the art that various modifications, combinations, sub-combinations and substitutions may be made, depending on design requirements and other factors. Any modification, equivalent substitution and improvement made within the spirit and principle of the present disclosure all should be included in the extent of protection of the present disclosure.

## Claims

1. A data processing method, applied to a single-layer switch, wherein the single-layer switch is configured to complete a target operation, the target operation comprises multiple stage operations, and the method comprises:
receiving (101) multiple in-network computation requests sent by a current GPU (A), wherein the multiple in-network computation requests correspond to the multiple stage operations one by one;
parallelly executing (102) the multiple stage operations for multiple GPUs (A, B, C, D) in a target group where the current GPU (A) is located, based on the multiple in-network computation requests.

2. The method according to claim 1, wherein,
the multiple in-network computation requests are received by a current port (A0) connected to the current GPU (A);
the parallelly executing the multiple stage operations for multiple GPUs (A, B, C, D) in the target group where the current GPU (A) is located based on the multiple in-network computation requests comprises:
at the current port (A0), determining (602) the multiple GPUs (A, B, C, D) in the target group based on each in-network computation request; receiving data to be processed for each stage operation sent by each GPU of the multiple GPUs (A, B, C, D); obtaining result data of each stage operation based on the data to be processed; sending the result data of each stage to the current GPU (A);
wherein data to be processed of different stage operations are received in parallel, and/or result data of different stage operations are sent in parallel.

3. The method according to claim 2, wherein,
each in-network computation request comprises a current group identifier of the target group;
the determining the multiple GPUs (A, B, C, D) in the target group based on each in-network computation request comprises:
determining the multiple GPUs (A, B, C, D) as group members corresponding to the current group identifier based on a pre-established correspondence between group identifiers and group members.

4. The method according to claim 2 or 3, wherein,
the target operation is an AllReduce operation;
the AllReduce operation comprises: a ReduceScatter stage operation;
the data to be processed comprises: original data of each GPU;
the result data comprises: local reduced data of the current GPU;
the obtaining the result data of each stage operation based on the data to be processed comprises:
performing reduction processing (703) based on the original data of each GPU to obtain local reduced data corresponding to the current GPU (A).

5. The method according to claim 4, wherein the receiving the data to be processed for each stage operation sent by each GPU of the multiple GPUs (A, B, C, D) comprises:
sending a load request to each GPU, wherein the load request is configured to trigger each GPU to send original data;
receiving a load response sent by each GPU, wherein the load response comprises the original data of each GPU.

6. The method according to any one of claims 2 to 5, wherein,
the target operation is an AllReduce operation;
the multiple stage operations comprise: an AllGather stage operation;
the data to be processed comprises: local reduced data of each GPU;
the current result data comprises: global reduced data;
the obtaining the result data of each stage operation based on the data to be processed comprises:
performing aggregation processing (902) on the local reduced data of each GPU to obtain the global reduced data.

7. The method according to claim 6, wherein the sending the global reduced data to the current GPU (A) comprises:
sending a storage request to the current GPU (A), wherein the storage request comprises the global reduced data.

8. A data processing method, applied to a GPU (A), comprising:
obtaining connection information of a single-layer switch, wherein the single-layer switch is configured to complete a target operation, and the target operation comprises multiple stage operations;
sending multiple in-network computation requests to the single-layer switch based on the connection information, wherein the multiple in-network computation requests correspond to the multiple stage operations one by one, so that the single-layer switch parallelly executes the multiple stage operations for multiple GPUs (A, B, C, D) in a target group where the GPU (A) is located based on the multiple in-network computation requests.

9. A data processing apparatus, applied to a single-layer switch, wherein the single-layer switch is configured to complete a target operation, the target operation comprises multiple stage operations, and the apparatus comprises:
a receiving module (1201), configured to receive (101) multiple in-network computation requests sent by a current GPU (A), wherein the multiple in-network computation requests correspond to the multiple stage operations one by one;
a processing module (1202), configured to parallelly execute (102) the multiple stage operations for multiple GPUs (A, B, C, D) in a target group where the current GPU (A) is located according to the multiple in-network computation requests.

10. A data processing apparatus, applied to a GPU (A), comprising:
an obtaining module (1301), configured to obtain connection information of a single-layer switch, wherein the single-layer switch is configured to complete a target operation, and the target operation comprises multiple stage operations;
a sending module (1302), configured to send multiple in-network computation requests to the single-layer switch according to the connection information, wherein the multiple in-network computation requests correspond to the multiple stage operations one by one, so that the single-layer switch parallelly executes the multiple stage operations for multiple GPUs (A, B, C, D) in a target group where the GPU (A) is located based on the multiple in-network computation requests.

11. An electronic device, comprising:
at least one processor; and
a memory communicatively connected to the at least one processor; wherein,
the memory stores instructions executable by the at least one processor to cause the at least one processor to perform the method according to any one of claims 1-8.

12. A non-transitory computer-readable storage medium storing computer instructions, wherein the computer instructions are used to cause the computer to perform the method according to any one of claims 1-8.

13. A computer program product comprising a computer program, wherein the computer program when executed by a processor implements the method according to any one of claims 1-8.
